# EUROPEAN PATENT APPLICATION

(11) **EP 4 711 962 A1**
(43) Date of publication of application: **18.03.2026**
(21) Application number: 25202254.6
(22) Date of filing: 15.09.2025
(51) Int. Cl.: G06F 21/60, G06F 21/62

(54) **HIGH PERFORMANCE ACCESS ENFORCEMENT ENGINE USING DATABASE PREDICATES**

(30) Priority: 16.09.2024 US 202418886815
(71) Applicant: Workday, Inc., Pleasanton CA 94588 (US)
(72) Inventor: Moreh, Jahanshah, Beverly Hills, CA (US); Olkin, Jeffrey C., Princeton, NJ (US); Matthews, Michael, Manteca, CA (US); Borges, Paulo, Livermore, CA (US); Bhaskar, Ribhu, Dublin (IE); Nagarajan, Rajkumar, Dublin (IE)
(74) Representative: P&TS SA (AG, Ltd.)

(57) **Abstract**

A system, method, and device for enforcing access security for queries to data stored at a data source are provided. The method generates a modified query that has security enforcement functionality embedded into the modified query. The method includes (i) receiving from a user a user query for data at a data source, (ii) determining a set of permissions for the user to access data at the data source, wherein the user is associated with the user query, (iii) generating a modified query to enforce access permissions to the data at the data source, (iv) providing the modified query to the data source, and (v) obtaining the data responsive to the user query for which the user has the requisite permissions. The modified query is generated based at least in part on the user query and the set of permissions for the user.

## Description

### BACKGROUND OF THE INVENTION

In the digital age, the protection of sensitive data stored in databases has become paramount. As organizations increasingly rely on databases to store vast amounts of critical information, the need for robust security measures to control access to this data has never been greater. Unauthorized access, data breaches, and cyberattacks pose significant risks to the integrity, confidentiality, and availability of data. These threats can lead to severe financial losses, reputational damage, and legal repercussions.

Traditional security measures, such as passwords and encryption, while essential, are often insufficient on their own to address the complex and evolving nature of modern cyber threats. As such, there is a pressing need for more advanced and dynamic security mechanisms that can provide granular control over who can access data and under what conditions.

### SUMMARY OF THE INVENTION

In some embodiments, a system may comprise one or more processors and a memory coupled to the one or more processors and configured to provide the one or more processors with instructions. The one or more processors may be configured to receive a user query for data at a data source; determine a set of permissions for a user to access the data at the data source, wherein the user is associated with the user query; generate a modified query to enforce access permissions to the data at the data source, wherein the modified query is generated based at least in part on the user query and the set of permissions for the user, and the modified query is for data responsive to the user query for which the user has requisite permissions; provide the modified query to the data source; and obtain the data responsive to the user query for which the user has the requisite permissions.

In some embodiments, generating the modified query comprises to determine, based at least in part on the set of permissions, a set of predicates that causes the modified query generated for the user query to only request the data responsive to the user query for which the user has the requisite permissions; and modify the user query based on the set of predicates to obtain the modified query.

In some embodiments, the data source comprises a database storing a dataset that comprises the data responsive to the user query; and access permissions for the dataset are enforced based at least in part on the database executing the set of predicates comprised in the modified query.

In some embodiments, the database returns data as if the access permissions to the dataset were enforced based on the set of permissions for the user without the database performing a local lookup of the set of permissions for the user.

In some embodiments, the set of predicates define one or more filtering components that are generated based at least in part on the set of permissions for the user.

In some embodiments, the data source comprises a database storing data responsive to the modified query.

In some embodiments, the data source comprises an event-based messaging system that publishes the data responsive to the modified query.

In some embodiments, the modified query comprises a filtering component that is generated based at least in part on the set of permissions for the user.

In some embodiments, an access security functionality is embedded in the modified query.

In some embodiments, the set of permissions for the user is obtained based at least in part on querying a policy repository for one or more policies applicable to the user in connection with accessing the data at the data source.

In some embodiments, the modified query comprises conditions according to which the user has access to the data at the data source.

In some embodiments, the conditions are determined based on the set of permissions for the user.

In some embodiments, generating the modified query comprises to determine a navigation path to determine a securing entity for a subset of the data responsive to the user query; determine the set of permissions for the user in relation to the securing entity; determine a set of predicates to enforce the user's access of data responsive to the user query, wherein the set of predicates are determined based at least in part on the set of permissions for the user in relation to the securing entity; and modify the user query based at least in part on the set of predicates to obtain the modified query.

In some embodiments, the set of predicates corresponds to a syntactical representation of a filter for restricting the user's access to the data at the data source.

In some embodiments, determining the navigation path comprises querying a mapping of attributes to securing entities for a map between (a) an attribute associated with the data responsive to the user query, and (b) a securing entity for which access permissions are defined.

In some embodiments, the mapping of attributes to the securing entities is predefined in association with a data model for the data source.

In some embodiments, determining the set of predicates to enforce the user's access of data responsive to the user query comprises traversing the navigation path and determining, for each particular node along a traversal of the navigation path, user permissions for the particular node.

In some embodiments, each node along the navigation path has an associated securing entity.

In some embodiments, the associated securing entity for a particular node is stored in metadata for the particular node.

In some embodiments, the one or more processors are further configured to obtain a security token for the user and authenticate the user in connection with providing access to the data at the data source.

In some embodiments, the user query is input in a programming language that identifies if an input path is valid while the input path is being input.

In some embodiments, execution of the modified query only provides data responsive to the user query that the user is permitted to access.

In some embodiments, execution of the modified query only provides data responsive to the user query that the user is explicitly or implicitly permitted to access.

In some embodiments, a method may comprise receiving a user query for data at a data source; determining a set of permissions for a user to access the data at the data source, wherein the user is associated with the user query; generating a modified query to enforce access permissions to the data at the data source, wherein the modified query is generated based at least in part on the user query and the set of permissions for the user, and the modified query is for data responsive to the user query for which the user has requisite permissions; providing the modified query to the data source; and obtaining the data responsive to the user query for which the user has the requisite permissions.

In some embodiments, a computer program product embodied in a non-transitory computer readable medium may comprise computer instructions for receiving a user query for data at a data source; determining a set of permissions for a user to access the data at the data source, wherein the user is associated with the user query; generating a modified query to enforce access permissions to the data at the data source, wherein the modified query is generated based at least in part on the user query and the set of permissions for the user, and the modified query is for data responsive to the user query for which the user has requisite permissions; providing the modified query to the data source; and obtaining the data responsive to the user query for which the user has the requisite permissions.

### BRIEF DESCRIPTION OF THE DRAWINGS

Various embodiments of the invention are disclosed in the following detailed description and the accompanying drawings.
Figure 1 is a block diagram of a network system according to various embodiments of the present application.
Figure 2 is a block diagram of a query evaluation service according to various embodiments of the present application.
Figure 3 is a block diagram of a trusted authentication service according to various embodiments of the present application.
Figures 4A-B illustrate an example of a data model according to various embodiments of the present application.
Figure 5 illustrates an example of a data model according to various embodiments of the present application.
Figure 6 illustrates an example of a modified user query according to various embodiments of the present application.
Figure 7 illustrates an example of a mapping of a securable entity to a securing entity for a data model according to various embodiments of the present application.
Figure 8 is a flow diagram of a method for executing a query according to various embodiments of the present application.
Figure 9 is a flow diagram of a method for modifying a query to have an access security functionality embedded in a modified query according to various embodiments of the present application.
Figure 10A illustrates an example of a filter for accessing data at a securable entity according to various embodiments of the present application.
Figure 10B illustrates an example of a filter for accessing data at a root entity according to various embodiments of the present application.
Figure 10C illustrates an example of a filter for accessing data at a securable entity according to various embodiments of the present application.
Figure 11 is a flow diagram of a method for executing a query according to various embodiments of the present application.
Figure 12 is a flow diagram of a method for modifying a query to have an access security functionality embedded in a modified query according to various embodiments of the present application.
Figure 13 is a flow diagram of a method for determining a filter for a user query according to various embodiments of the present application.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

As used herein, a securing entity may include a data object that has associated access permissions that indicate whether a user has permission to access a particular secured entity. In some embodiments, the securing entity is a node in a data graph (which may also be referred to herein as a securing node), and the node may have associated access permissions policies that indicate whether a user has permission to access a secured entity (e.g., data stored at the secured entity). In some cases, the securing entity may itself be a secured entity. For example, the securing entity may have an associated access permissions policy(ies) that indicates whether the user can access the securing entity itself. In other cases, the securing entity and the secured entity may be different nodes within a navigation path that is generated and along which a database is to traverse to obtain data responsive to a particular query. For example, the securing entity may be a parent node to the secured entity in the context of the navigation path (e.g., the securing entity is an upstream node relative to the secured entity in the context of the navigation path).

As used herein, a secured entity may include a data object for which access is secured by an access permissions policy(ies) associated with a securing entity. In some embodiments, the secured entity is a node in a data graph and a determination of whether a user has requisite permissions to access the secured node is based at least in part on one or more access permission policies associated with the securing entity. According to various embodiments, the securing entity and the secured entity are defined in a corresponding data model (e.g., the data model developer enumerates for a particular node or type of node the corresponding securing entity, etc.).

In the field of data security, ensuring that only authorized users can access sensitive information is of paramount importance. Traditional database systems often rely on complex permission systems to manage access control. These systems typically require the database to query user permissions before executing any data request. While effective, this approach introduces several challenges and inefficiencies. Firstly, querying for user permissions on each database access request can lead to performance bottlenecks, especially in high-traffic environments. The additional overhead of permission checks can significantly slow down the execution of queries, resulting in a less responsive system. Moreover, maintaining and updating the permission structures can become cumbersome as the number of users and data access rules increase. Secondly, the conventional method of permission verification can be vulnerable to various security threats. For instance, if the permission management system itself is compromised, an attacker could potentially gain unauthorized access to sensitive data. Additionally, this system can be prone to human errors during the setup and maintenance of permissions, leading to inadvertent security breaches.

Enforcing access to data that resides in a database is a well-understood problem with several known solutions. Typical solutions for enforcing access to the data include (i) the use of an access enforcement engine that is external to the database, and (ii) the use of an access enforcement engine that is native to the database. In the case of (i), the use of an access enforcement engine external to the database often impacts the performance of database queries by introducing latencies inherent in access enforcement outside of the database engine. In effect, the access enforcement engine must first retrieve every possible row of data and then enforce which row can be delivered to the query requestor. In the case of (ii), the use of an access enforcement engine native to the database often performs satisfactorily but at the expense of rigidity for managing access control policies. This is because access policies must be expressed in terms of rules native to the database.

Various embodiments overcome both these challenges through methods that enable ultra-efficient database queries such that requestors of data can only read or modify the data to which the requestors explicitly have been granted access. The policies (e.g., the access permissions policies) governing user access are managed external to the database. In some embodiments, the policies are unrelated to database table access policies, and can be arbitrarily flexible.

Various embodiments that provide a system, method, and device for enforcing access security for queries to data stored at a data source are provided. The method generates a modified query that has security enforcement functionality embedded into the modified query. The method includes (i) receiving a user query for data at a data source, (ii) determining a set of permissions for a user to access data at the data source, wherein the user is associated with the user query, (iii) generating a modified query to enforce access permissions to the data at the data source, (iv) providing the modified query to the data source, and (v) obtaining the data responsive to the user query for which the user has the requisite permissions. The modified query is generated based at least in part on the user query and the set of permissions for the user. The modified query is for data responsive to the user query for which the user has requisite permissions.

Various embodiments extend traditional access decisions from a binary "yes/no" access permission to a more granularly enumerated set of access permissions, such as an access permission form of "yes/no/yes with restrictions." In some embodiments, the system expresses the restrictions associated with a conditional access (e.g., an access permission response of "yes with restrictions") in terms of a set of relational database predicates (also referred to herein as "predicates") that can be provided to a database engine for filtering the data. The set of predicates can be enumerated in a query, such as by modifying a user query to obtain a modified query based at least in part on the set of predicates. As an example, the set of predicates is used to define a set of one or more filters to ensure that only information responsive to the user query for which the user has the requisite access permissions is returned by the database after executing the modified query.

According to various embodiments, an access security functionality is embedded in the modified query. A received user query is modified to embed the access security functionality to ensure that only data for which the user has requisite access permissions is returned as a result for the modified query. As an illustrative example, the system comprises a business rule that states: "managers can view the salary of their employees," and the system stores a database table employee_salary that contains employees' salary data, indexed by employee_name. The database table employee_managers contains data about employees including their name and the name of their managers. A user (e.g., a query_requestor) in the company may enter a query "select * from employee_salary". If this query was allowed to proceed unmodified then the result is to return every employee's salary to the requestor, which is unacceptable from an access security perspective. To enforce the applicable security, the query is to be modified with a filter (e.g., a set of predicates) such that the query requestor only obtains the salaries of employees for whom they are a manager of in response to the input query. Using the foregoing example, to enforce the access security, the query is to be modified (e.g., to obtain the modified query) so that the database engine executes the query as "select * from employee_salary where employee_name in (select name from employee_managers where manager_name = query_requestor)".

According to various embodiments, the system comprises an engine or service that implements business rules to formulate appropriate database predicates to apply the filter for enforcing access security (e.g., "the where clauses"). The modified query that embeds the security functionality is executed by the database engine. In some embodiments, the database engine executes the queries without the database querying an authorization or access security system/service. For example, the database does not have visibility to the security rule or access permissions policies. Accordingly, the system can leverage the inherent efficiencies and optimizations of relational database systems, developed and improved over the last 45 years.

According to various embodiments, the system makes the enforcement of access rules via the modification of user queries transparent to application developers, database administrators, and business people while leveraging the ultra-efficient database access, which is particularly high performing for very large datasets.

The enforcement of access security via modification of a user query can be extended beyond database queries. In some embodiments, the system can use filters, such as filters defined by a set of predicates, in connection with event-based messaging (publish/subscribe) systems where the filtering can be executed by the highly efficient message broker (e.g., analogous to the database engine in a relational database management system).

Customers for services storing data at scale (e.g., datasets having tens of millions of records or more) demand secure and fast access to data. Related art systems that enforce access security introduced significant latencies and/or rigidity in the management of access permission policies. Various embodiments provide a system or process that enables customers to overcome access enforcement challenges of related art systems, particularly in a manner that is optimized and has negligible performance impacts. For example, some related art systems addressed access security enforcement by leveraging a "database in memory model" which is inherent to an Object Management System (OMS). This model, however, is not sustainable for very large data sets because of its memory requirements.

According to various embodiments, the efficiency of access security enforcement is in the creation of the command (e.g., a modified query) that implements (e.g., embeds) the security functionality. The database executes the command (e.g., the modified query) and returns data that is merely responsive to the command, which effectively corresponds to the data responsive to the initial query (e.g., the user query) for which the user has requisite permissions.

In some embodiments, the system improves the computer by enabling access enforcement or security of data between a user system and a database or storage system. This access enforcement or security of data is made possible by a technical solution that receives a user request for data, evaluates the data the user is able to access by assessing stored user privileges with regard to data, generating an appropriate query to a storage system or database to retrieve only the data that is allowed to be accessed by the user, providing the query to the storage system or database, receiving the data responsive to the query, and providing the data to the user that requested the data that has been filtered to only allow data that the user is permitted to access. The intermediating technical solution provides a technical solution to the technical problem of a database or storage system not efficiently or not at all being able to provide the appropriate access filtering based on stored set of access rights or privileges.

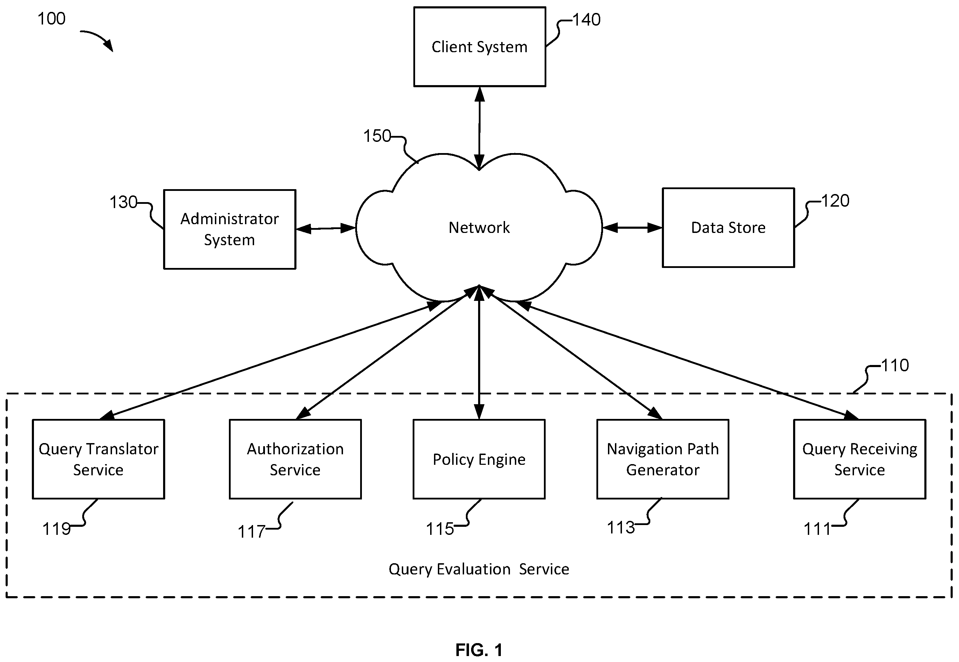

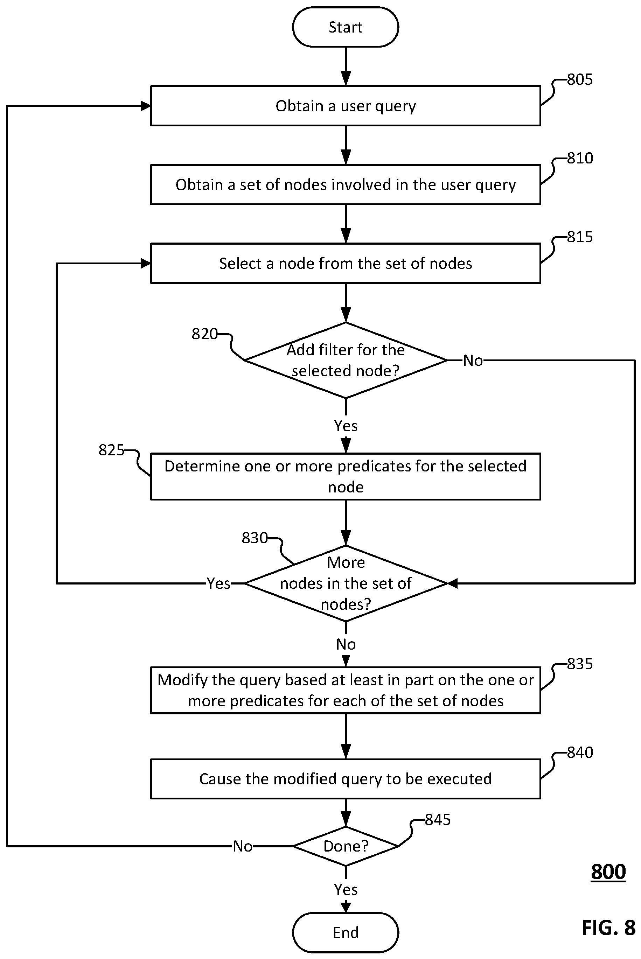

Figure 1 is a block diagram of a network system according to various embodiments of the present application. In some embodiments, system 100 is implemented at least in part by system 200. System 100 may implement one or more of processes 800, 900, and/or 1100-1300 of Figures 8, 9, and 11-13.

In the example illustrated in Figure 1, system 100 includes query evaluation service 110, administrator system 130 and/or client system 140. System 100 may additionally include one or more data stores, such as data store 120, and network 150 over which one or more of query evaluation service 110, client system 140, administrator system 130, and data store 120 are connected. In some embodiments, query evaluation service 110 is implemented by a plurality of servers. In various embodiments, network 150 includes one or more of a wired network and/or a wireless network such as a cellular network, a wireless local area network (WLAN), or any other appropriate network. System 100 may include various other systems or terminals.

According to various embodiments, query evaluation service 110 enforces access security based at least in part on modifying a received user query to embed the security functionality therein. The security functionality that is embedded in the modified query comprises one or more filters. As an example, the one or more filters can be respectively defined by a set of predicates. The modified query is provided a database (e.g., data store 120) which executes the modified query to obtain data responsive to the initial user query for which the user has requisite access permissions (e.g., according to one or more predefined access policies).

According to various embodiments, the query is translated (e.g., modified) in a manner that uses the database efficiently but enforces security provisions stipulated by the securing entity (e.g., access permissions associated with the securing entity). In connection with executing the modified query, the database does not query an access permissions policy or enforcement engine. For example, the database does not query an authorization engine or service. Instead, the access security is enforced by the security functionality embedded in the modified query as a filter(s). As another example, the mere execution of the modified query causes the access security to be enforced because the query is modified in a manner that defines responsive data to the modified query as a subset of responsive data to the initial query for which the user has requisite access permissions. Accordingly, the database can execute the modified query as it would a normal query without concern for access security enforcement and through execution of the modified query the database effectively enforces the access security.

The system uses query evaluation service 110 to receive queries and cause the query to be evaluated with enforcement of access security (e.g., one or more predefined access permission policies). In some embodiments, query evaluation service 110 is configured to receive a user query, determine one or more access permissions for the user with respect to data responsive to, or invoked by, the user query, modify the user query (e.g., generate a modified query), and cause the modified query to be executed (e.g., provide the modified query to a database for execution) to obtain data responsive to the initial user query with the applicable access security being enforced.

In the example shown, query evaluation service 110 comprises one or more of query receiving service 111, navigation path generator 113, policy engine 115, authorization service 117, and/or query translator service 119.

Query evaluation service 110 uses query receiving service 111 to obtain a user query, such as a query input by a user via client system 140. In connection with obtaining the user query, query receiving service 111 can parse the user query to obtain context information, such as an identifier for the user associated with the user query (e.g., an identifier for the user that input the user query).

In response to receiving a user query, query evaluation service 110 processes the query to identify the data objects or entities that are used in connection with, or invoked by, evaluating the user query. For example, the query evaluation service 110 can identify the information or type of information that is responsive to the user query. Query evaluation service 110 uses navigation path generator 113 to determine a navigation path for traversing the dataset to obtain data responsive to the query. As an illustrative example, the dataset can be represented in a data graph. In some embodiments, navigation path generator 113 can identify nodes in the data graph that are traversed in connection with obtaining data responsive to the user query.

In some embodiments, each node in the data graph has an associated set of access permissions. For example, each particular node in the data graph has a corresponding securing entity having access permissions that are enforced with respect to the access of the particular node. As another example, each data object in a database has a pointer to a securing entity for which an associated access permissions policy(ies) enumerates the requisite access permissions, if any, for the particular data object. In some embodiments, the pointer is not stored in the data object itself or the database. For example, the pointer to the applicable securing entity can be defined in a policy such as an access permissions policy.

An administrator (e.g., an application developer or data model architect) can specify a path (e.g., the navigation) to be used to secure a table or field in a database. In some embodiments, the path is not stored in the data. Instead, the path can be stored in a policy (e.g., as part of the access permissions policy(ies)). As an illustrative example, the policy data may indicate access permissions for a particular data object (e.g., a particular data node in the navigation path). In connection with configuring the data model, the administrator specifies that when securing a particular node or type of node (e.g., a field in the database) a particular navigation path is to be used. Each node type has its own securing path.

Navigation path generator 113 uses a provisioned relationship between a securing entity and some attribute of the user or requestor or original provider of the query to determine the navigation path.

According to various embodiments, navigation path generator 113 determines the navigation path by creating a graph traversal from a particular node to the securing value on the securing node. Navigation path generator 113 can perform recursive traversal to determine the navigation path to be traversed from the root node. For example, navigation path generator 113 can start at a leaf or field for which responsive data is stored, determine a securing entity and the path defined for securing the leaf or field, and in response to determining the securing entity for the leaf or field, the navigation path generator 113 determines the object securing the leaf or node. Navigation path generator 113 can iteratively perform this for an indication of the next securing entity for a current secured entity until navigation path generator 113 has walked from the leaf or field responsive to the query to the root node. In some embodiments, authorization service 117 is then queried for the securing values specific to the authenticated user to be applied as a filter against the path provided by the navigation path generator 113.

Query evaluation service 110 uses policy engine 115 to store or otherwise access a set of one or more policies that specifies a securing path for a data model or for a particular object/node type in the data model. As an example, the set of one or more policies may comprise one or access permissions policies. In some embodiments, the set of one or more policies may specify (i) a securing path for a data model or for a particular object/node type in the data model, and (ii) a set of access permissions/authorizations for accessing a secured entity. The set of access permissions/authorizations can be defined in relation to a securing entity so that query evaluation service 110 can determine the access permission(s) required for accessing a secured entity that is secured by the securing entity.

In some embodiments, navigation path generator 113 queries policy engine 115 for an indication of a securing path (e.g., a securing entity) associated with a particular node. Navigation path generator 113 can iteratively query the policy engine 115 for indications of the securing path and/or securing entities as the navigation path generator 113 walks the path from the leaf node or field responsive to the initial query and the root node to determine the navigation path.

Query evaluation service 110 uses authorization service 117 to determine whether the user (or system/service from which the initial query is received) has the requisite permissions to access data at the secured nodes along the determined navigation path. In some embodiments, authorization service 117 is queried for the access permission for each node along the navigation path. For example, as query evaluation service 110 (e.g., query translator service 119) walks the navigation path, the authorization service 117 is queried for the access permissions securing the particular node. Authorization service 117 determines the access permissions for accessing the particular node based at least in part on one or more access permission policies, such as based on querying policy engine 115.

In some embodiments, authorization service 117 specifies whether the user (or other system or service) associated with the user query has requisite permission to access the data at the particular node and/or the conditions under which the user may access the data. For example, in response to being queried for an indication of whether the user has permission to access the data at a particular node (e.g., a secured entity), authorization service 117 returns a result of: (a) an indication that the user cannot access the data (e.g., the user does not have requisite permission), (b) an indication that the user can access the data (e.g., the user has permissions for unconditional access to the data), or (c) an indication that the user can access the data and the conditions under which (or restrictions to) the user can access the data (e.g., an indication that the user has conditional access to the data at the secured node).

Query evaluation service 110 uses query translator service 119 to enforce access permissions in connection with executing a user query (e.g., the initial query). In some embodiments, query evaluation service 110 uses query translator service 119 to translate (e.g., modify) the user query to obtain a modified query. For example, query translator service 119 modifies the user query to embed security functionality therein.

In some embodiments, the security functionality embedded into the user query to obtain the modified query includes one or more filters. The filter(s) is configured so that execution of the modified query (e.g., with the filter(s)) will return only data that is responsive to the initial user query to the extent that the user has the requisite access permissions. For example, the result to execution of the modified query is the subset of data responsive to the initial query for which the user has access permissions.

According to various embodiments, the access security for the data responsive to the user query is enforced through execution of the modified query comprising one or more filters (e.g., filters configured based at least in part on one or more access permission policies). For example, a database executing the modified query does not need to determine permissions to data to be returned for the query because the access permissions are already enforced in the data that the database determines to be responsive to the modified query.

In some embodiments, the filter(s) used in the modified query is defined based at least in part on a set of predicates. Query translator service 119 can determine the set of predicates, such as based at least in part on the conditions or restrictions according to which the user is permitted to access the data responsive to the initial query. For example, query translator service 119 modifies the query based at least in part on the result from authorization service 117 provided in response to authorization service 117 being queried for an indication of whether the user has permission to access the data at a particular node (e.g., a secured entity).

In response to obtaining (e.g., determining) the modified query, query evaluation service 110 provides the modified query to a database, such as data store 120, for execution. In response to obtaining the modified query, data store 120 executes the modified query and returns the data responsive to the modified query. According to various embodiments, the data responsive to the modified query corresponds to data responsive to the initial user query for which the user has the requisite permissions to access. In some embodiments, the data store 120 does not enforce any additional security functionality beyond the execution of the modified query which has security functionality embedded therein, such as in the form of a filter (e.g., a set of predicates defining the filter(s)).

Administrator system 130 comprises an administrator system for use by an administrator. For example, administrator system 130 comprises a system for communication, data access, computation, etc. An administrator uses administrator system 130 to maintain and/or configure the performance of query evaluation service 110 and/or one or more of data stores (e.g., data store 120). For example, an administrator uses administrator system 130 to start and/or stop services on query evaluation service 110 and/or data store 120, to reboot data store 120, to install software on query evaluation service 110 and/or data store 120, to add, modify, and/or remove data on data store 120, etc. Administrator system 130 communicates with query evaluation service 110 and/or data store 120 via a web-interface. For example, administrator system 130 communicates with query evaluation service 110 and/or data store 120 via a web-browser installed on administrator system 130. As an example, administrator system 130 communicates with query evaluation service 110 and/or data store 120 via an application running on administrator system 130.

In various embodiments, an administrator (or other user associated with a tenant or entity with which the tenant is associated such as a customer) uses administrator system 130 to configure a service provided to a tenant (e.g., a tenant comprises an organization such as a company, a government entity, a sub-organization of an organization (e.g., a department), or any other appropriate organization). As an example, the administrator uses administrator system 130 to communicate with query evaluation service 110 to configure the service provided to the tenant. For example, administrator system 130 may communicate with query evaluation service 110 via a business application layer. The business application layer can serve as a gateway via which the administrator may interface to manage, configure, etc. a data layer, a control layer, and/or a business layer of query evaluation service 110.

According to various embodiments, the administrator (e.g., an application developer or data model architect) uses administrator system 130 to configure (e.g., define) a data model. For example, the administrator defines a securing path (e.g., securing entities) for a data object type (e.g., a particular node or node type). Additionally, or alternatively, the administrator can use administrator system 130 to configure one or more policies for query evaluation service 110, such as one or more security policies (e.g., an access permissions policy that defines user permissions for data stored in data store 120, such as permissions for a particular securing entity or node or node type secured by the securing entity) and/or one or more compute resource policies, etc.

Data store 120 stores one or more datasets. In various embodiments, the one or more datasets comprise human resources data, talent data, performance data, financial data, organizational planning data, or any other appropriate data. In some embodiments, data store 120 stores one or more datasets for a plurality of tenants. In various embodiments, a tenant comprises an organization such as a company, a government entity, a sub-organization of an organization (e.g., a department), or any other appropriate organization. For example, data store 120 comprises one or more database systems for storing data in a table-based data structure, an object-based data structure, etc. In various embodiments, data store 120 comprises one or more of: a business database system, a human resources database system, a financial database system, a university database system, a medical database system, a manufacturing database system, or any other appropriate system. In some embodiments, data store 120 comprises one or more object-oriented database systems.

According to various embodiments, a user uses system 100 (e.g., a client or terminal, such as client system 140, that connects to query evaluation service 110 via network 150) to define business logic and/or to execute such business logic with respect to data (e.g., one or more datasets) stored on data store 120. As an example, a user inputs to client system 140 one or more requests (e.g., a user query) for a planning session to be communicated to query evaluation service 110 for query evaluation service 110 to load a planning session and enable the user to implement various scenarios of talent planning sessions (e.g., succession planning sessions, performance evaluation sessions, compensation review sessions, etc.). As another example, a user inputs to client system 140 one or more queries to be run against a dataset. In response to receiving the business logic, query evaluation service 110 processes the queries (e.g., determines a manner for modifying the queries to enforce access permissions) and provides the processed queries (e.g., the modified queries) to the data 120 to obtain a response to the one or more queries.

In some embodiments, the query receiving service 111, navigation path generator 113, policy engine 115, authorization service 117, and query translator service 119 can be implemented on a single server or a plurality of servers. For example, query translator service 119 and navigation path generator 113 are different modules running on a same server or set of servers.

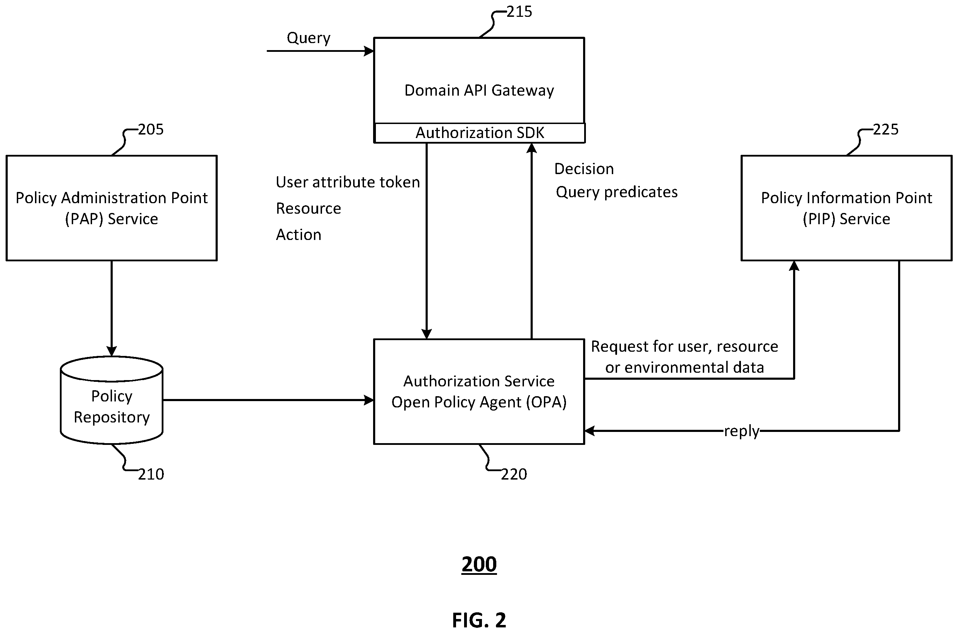

Figure 2 is a block diagram of a query evaluation service according to various embodiments of the present application. In some embodiments, system 200 may implement one or more of processes 800, 900, and/or 1100-1300 of Figures 8, 9, and 11-13. In the example shown, system 200 comprises a policy administration point (PAP) service 205, a policy repository 210, a domain API gateway 215, an authorization service 220, and a policy information point (PIP) service 225.

According to various embodiments, PAP service 205 is configured to store one or more policies in policy repository 210. For example, a user accesses PAP service 205 to define a policy, such as an access permissions policy specifying permissions for data stored in a dataset. The user can store, via PAP service 205, the policy in policy repository 210. In some embodiments, the policy is stored as code, such as in a particular language interpretable by authorization service 220 for determining the parameters for configuring a filter to enforce access security with respect to data stored in a dataset.

In some embodiments, domain API gateway 215 enforces a security, such as an access permissions policy. Domain API gateway 215 comprises a query layer and domain API gateway 215 can modify the query to obtain a modified query with embedded security functionality. Domain API gateway 215 queries an authorization service 220 for parameters for the access security functionality.

As illustrated, domain API gateway 215 is used to receive a query. In response to receiving the query, domain API gateway 215 processes the query, such as to determine a user associated with the query (e.g., a user from which the query is received). Domain API gateway 215 can also identify data responsive to the query, or data types or fields storing data responsive to the query. Domain API gateway 215 sends to authorization service 220 a request for an indication of whether the user associated with the query has permission to access data responsive to the query. Domain API gateway 215 may comprise an authorization software development kit (SDK) that causes the request to be modified (e.g., for the query to be modified with the query predicates) in accordance with the response from authorization service 220 in connection enforcing access security in connection with execution of the query. As an example, the request may include one or more of an indication of the user (e.g., a user attribute token), an indication of the resource subject to the query, and an action to be performed in connection with execution of the query. The authorization SDK comprised in domain API gateway 215 may send to the authorization service 220 the user attribute token (e.g., a security token), a resource (e.g., a resource to be accessed during processing of the query), and an action to be performed with respect to the resource.

In response to receiving the request of enforcing access security in connection with execution of the query, authorization service 220 can determine whether the user has permission to execute the query. For example, authorization service 220 determines whether the user has requisite access permissions to data responsive to the query and/or an extent to which the user has permission to access the data responsive to the query. In some embodiments, authorization service 220 determines one or more conditions or restrictions according to which the user has permission to access the data responsive to the query (or permission to execute the query) based on the extent to which the user has permission to access the data responsive to the query. In response to evaluating the access permissions for the query, authorization service 220 can return to domain API gateway 215 an indication of whether the user has requisite permissions to access the data responsive to the query (e.g., no, yes, or yes with conditions). In the event that the user has requisite permissions for a subset of the data responsive to the query, authorization service 220 additionally provides to domain API gateway 215 an indication of the conditions or restrictions according to which the user is permitted to access the data responsive to the query.

According to various embodiments, the indication of the conditions or restrictions according to which the user is permitted to access the data responsive to the query comprises a set of predicates (e.g., query predicates). The set of predicates can correspond to (e.g., define) a set of one or more filters to be applied during execution of the query (e.g., to be embedded in a modified query) to ensure that the appropriate access security is enforced.

Authorization service 220 determines whether and/or the extent to which the user has requisite access permissions to data responsive to the query based at least in part on a policy (e.g., an access permissions policy). The policy may enumerate permissions to access certain data in the dataset, such as particular types of data or data nodes in the dataset. Authorization service 220 can obtain a policy (or information pertaining to a policy) from policy repository 210. Additionally, authorization service 220 can query policy information point (PIP) service 225 for information related to whether the user has permission to execute the query (e.g., additional user attributes that are not embedded in the token) and for any conditions or restrictions according to which the user has permission to execute the query. In the example shown, authorization service 220 sends a request to PIP service 225, the request comprising an indication of the user associated with the query (e.g., a user identifier, a user token, etc.) and an indication of a resource or environmental data for which PIP service 225 is to provide information related to whether the user has permission to execute the query.

Authorization service 220 may receive from the PIP service 225 information related to whether the user has requisite access permissions to access data responsive to the query and any conditions or restrictions pertaining to the subset of the data responsive to the query for which the user has requisite access permissions (e.g., conditions or restrictions that serve as limits to the user's access to the data responsive to the query), if any. In response to receiving the reply from PIP service 225, authorization service 220 can determine the set of predicates to return to domain API gateway 215 for use in modifying the query.

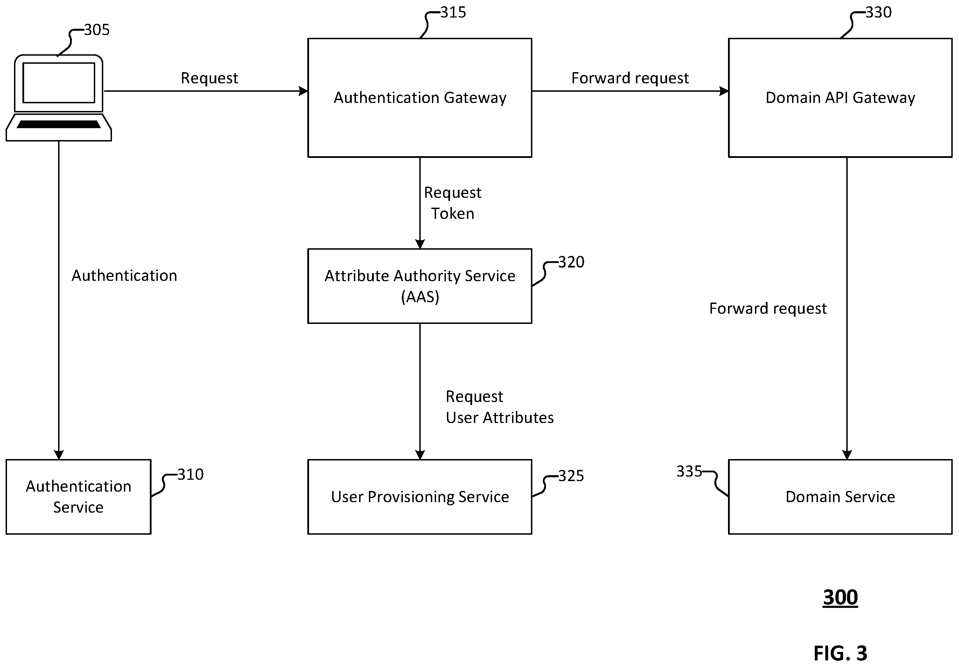

Figure 3 is a block diagram of a trusted authentication service according to various embodiments of the present application. In some embodiments, system 300 may implement one or more of processes 800, 900, and/or 1100-1300 of Figures 8, 9, and 11-13.

In connection with querying a dataset, a user uses client system 305 to authenticate with authentication gateway 315. Authentication gateway 315 can determine whether the user (e.g., client system 305) can query the system (e.g., to send queries to the system, such as a query evaluation service 110 of system 100). Client system 305 can authenticate with authentication service 310, which may provide a token to client system 305 to use to be authenticated/validated by authentication gateway 315. In response to successfully authenticating the user, the user can use client system 305 to query the system. In the example shown, client system 305 sends a request (e.g., a user query) to the system for evaluating queries. The request is received by authentication gateway 315, which is configured to manage the user sessions and proxies for the users' requests (e.g., user queries).

In response to receiving the request from client system 305, authentication gateway can request a token from attribute authority service 320. Attribute authority service 320 is configured to validate, generate, and manage security tokens. Attribute authority service 320 can return the token for the user associated with the query. In connection with obtaining (e.g., generating) the token to be returned to authentication gateway 315, attribute authority service 320 can request from user provisioning service 325 a set of user attributes for the user associated with the query. User provisioning service 325 can manage user attributes and return the set of user attributes for the user to attribute authority service 320.

In response to receiving from attribute authority service 320 a token for the user associated with the request (e.g., the user query), authentication gateway 315 forwards the request to domain API gateway 330. Authentication gateway 315 may include with the forwarded request the token for the user. In some embodiments, domain API gateway 330 is similar to domain API gateway 215. Domain API gateway 330 can obtain a modified request (e.g., a modified query) by modifying the request based at least in part on a set of access permissions for the user with respect to the data responsive to the request. For example, domain API gateway 330 modifies the request to embed in the modified request a security functionality configured to enforce the access security with respect to the data responsive to the request. In response to obtaining the modified request, domain API gateway 330 sends the modified request to domain service 335 for execution.

Domain service 335 obtains the modified request and executes the modified request. Domain service 335 can return to domain API gateway 330 data responsive to the modified request, which corresponds to data responsive to the initial request to the extent that the user has the requisite access permissions with respect to the responsive data. For example, the data responsive to the modified request is only a subset of the data responsive to the initial request for which the user has requisite access permissions.

According to various embodiments, each node in a data graph has a defined securing entity according to the particular data model. For example, each node of data in a database has a pointer to a securing entity. In some embodiments, the tables or data entities do not store the pointers to their respective securing entity. Instead, the securing entities for a data entity (e.g., a table) are defined in the data model or a security policy (e.g., an access permissions policy). The security policy may store a predefined mapping of data entities or types of data entities to securing entities. As an example, the administrator (e.g., an application developer) specifies the specific path to be used for securing a table/field.

In some embodiments, the data model is developed in Java. The system can leverage the functionality in Java that only permits (or guides the user to input) a valid path for accessing data. The system can use the Java language itself to enforce rules based on the actual Java types. In some embodiments, the data model is a translated data model that is configured to be compatible with Java data objects. The system can enforce the rules permitted by Java when the user is inputting a query for data in the data model.

According to various embodiments, the system implements a data model and a policy of metadata that describes a graph-link notation from one data entity to another data entity. A policy service can query the policy of metadata to look up a path to be applied to the node instances or query.

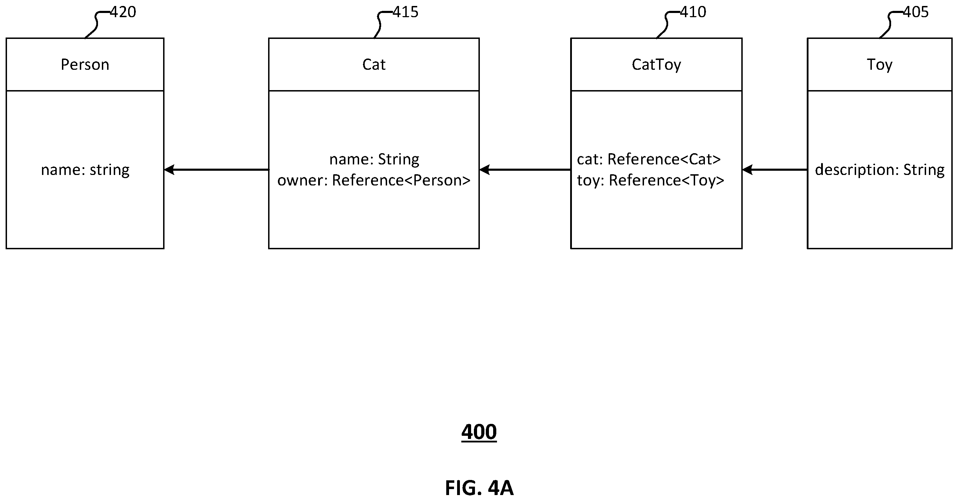

Figures 4A-B illustrate an example of a data model according to various embodiments of the present application. In the example shown in Figure 4A, data model 400 comprises a "toy" data entity 405, a "catToy" data entity 410, a "cat" data entity 415, and a "person" data entity 420. In some embodiments, the data model 400 is defined by an administrator, such as an application developer. In connection with defining the data model 400 and the data entities comprised in data model 400, the administrator defines a relationship between data entities. For example, the arrows between data entities indicate references between two particular data entities. Each of the data entities can store metadata indicating the parameters for the data entity and the associated references. As illustrated, "cat" data entity 415 comprises an indication of a reference to the cat owner defined by the "person" data entity 420.

According to various embodiments, each data entity can represent a table in a database. The system uses data model 400 to translate the query to use the database efficiently but enforce security provisions stipulated by securing entities for nodes in the navigation path of the query.

In some embodiments, the references between data entities are used in connection with defining a traversal across a data graph. For example, the use of a reference between two particular data entities can be used to traverse to the data graph. The references can serve as directional links to determine the direction to travel from one node to another node. Using the example shown, the navigation path between the "person" data entity 420 and the "toy" data entity 405 can be: (a) start at "toy" data entity 405, (b) proceed to the "catToy" data entity 410, (d) proceed to the "cat" data entity 415, and (e) proceed to the "person" data entity 420. From the perspective of the "person" data entity 420, the system can traverse backwards through the references between data entities such that the navigation proceeds from the "person" data entity 420 to "cat" data entity 415, to "catToy" data entity 410, and then to "toy" data entity 405.

According to various embodiments, the system uses data model 400 in connection with enforcing access security for the data entities. The system can generate a navigation path to be traversed in connection with executing a query. The navigation path is determined based at least in part on the fields of data responsive to the query and the data model 400, such as the data entities having a reference/relationship with the fields of data responsive to the query. In response to generating the navigation path, the system traverses the navigation path. During traversal of the navigation path through the data model, the system checks access permissions at each node that the system encounters during the traversal and based on the access permissions for each particular node the system can determine a set of predicates to be applied to the initial query (e.g., to be used to determine a modified query) that serve as a security functionality so that only responsive data for which the user has access permissions is returned from execution of the modified query. For example, for each query, the system pulls out each individual node accessed in the process of running the query (e.g., each node within the navigation path for the query) and for each node the system determines what actions the user can perform with respect to the particular node.

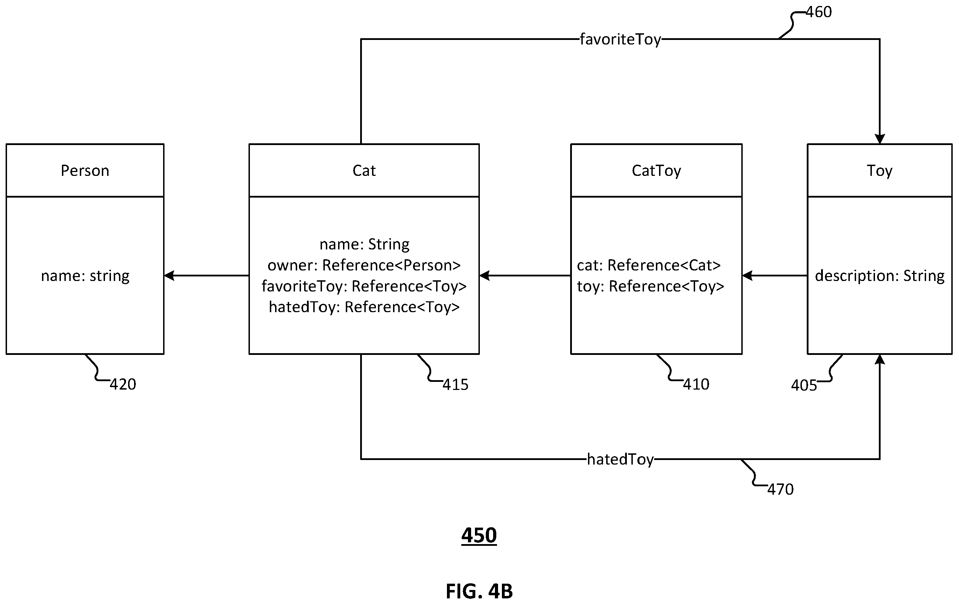

Data model 450 shown in Figure 4B is similar to data model 400, however, additional references have been added between "cat" data entity 415 and "toy" data entity 405. For example, "cat" data entity 415 is modified to include the attribute of a favorite toy with a reference 460 to "toy" data entity 405, and to include the attribute of a hated toy with a reference 470 to "toy" data entity 405.

In connection with processing the query for evaluation, such as to generate the modified query to send to the database, the system obtains a node list identifying a set of nodes to be accessed during execution of the query. The data model defines a securing route for each node. As an example, the people table (e.g., the "person" data entity 420) is secured by the cat name table (e.g., "cat" data entity 415). Accordingly, whenever a query is to access a person node, the system determining the access security enforcement mechanism (e.g., the set of predicates) returns with conditions for which a user can see the person node.

In some embodiments, the list of values that a user associated with a query can access is defined based at least in part on the applicable security policy data (e.g., the access permissions policy).

As an illustrative example, if a user is trying to query for a list of all persons, the service (e.g., the authorization service) that determines the access security enforcement mechanism (e.g., the set of predicates to define a filter(s)) obtains the user's access permissions with respect to the persons table. In the event that the system (e.g., a policy engine) determines, based on the user access permissions with respect to the persons table, that the user only has permission to access a person that is related to a "cat" data entity having a value equal to "Princess Donut" (e.g., people in the persons table having an associated cat named "Princess Donut") or "Garfield," the system determines a set of predicates to define a query translation filter that filters down data responsive to the initial query (e.g., the set of people in the persons table) to only those people that meet the logic determined based on the user's access permissions for the particular data entity.

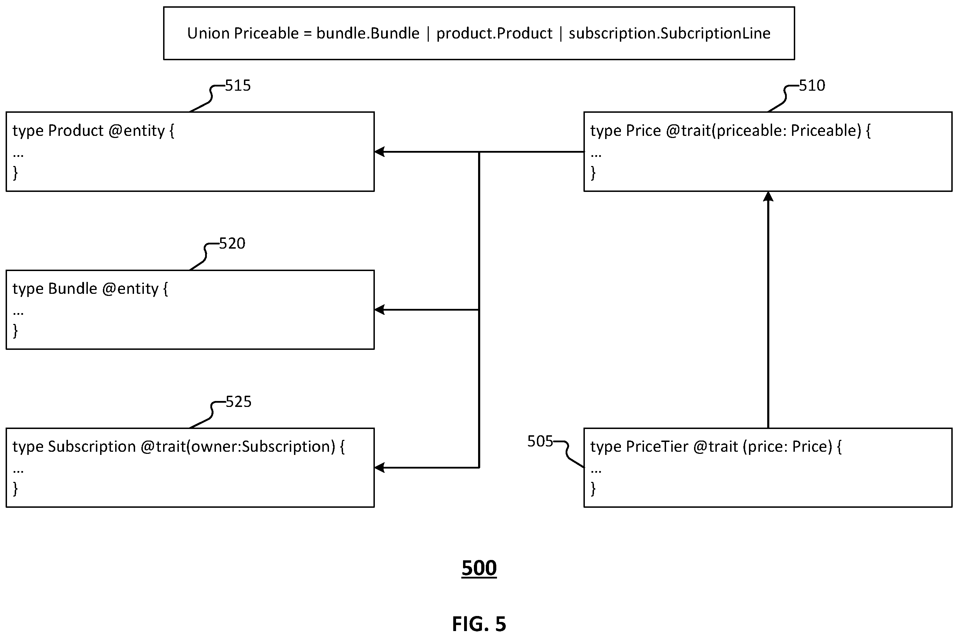

Figure 5 illustrates an example of a data model according to various embodiments of the present application. In the example shown, data model 500 indicates relationships for information pertaining to pricing of products, bundles, or subscriptions. Data model 500 comprises a "price tier" data entity 505 having a reference to "price" data entity 510, with references to "product" data entity 515, "bundle" data entity 520, and "subscription" data entity 525. A query to identify items in the database having a trait equal to Priceable, which is a trait of "price" data entity 510, can be a union of "product" data entity 515, "bundle" data entity 520, and "subscription" data entity 525. In some embodiments, a trait comprises an attribute of an entity or another trait. A trait is dependent on its owner (e.g., an owning entity or trait) and may not exist if the owner does not exist.

For data model 500, a query for all the prices returns an empty result set because there is no securing entity defined for the "price" data entity 510. A more complex query may include a query that joins a set of data entities (e.g., tables), such as a query for products (e.g., from "product" data entity 515) associated with a price (e.g., in "price" data entity 510) having a priceable trait equal to a subscription billing product. In connection with generating a modified query for this query, the system determines the navigation path from "product" data entity 515 to "price" data entity 510. Data model 500 indicates that "price" data entity 510 is the securing entity for "product" data entity 515, and thus the system checks the user's access permissions for data in the "product" data entity 515 based on the access permissions enumerated for the securing entity (e.g., "price" data entity 510).

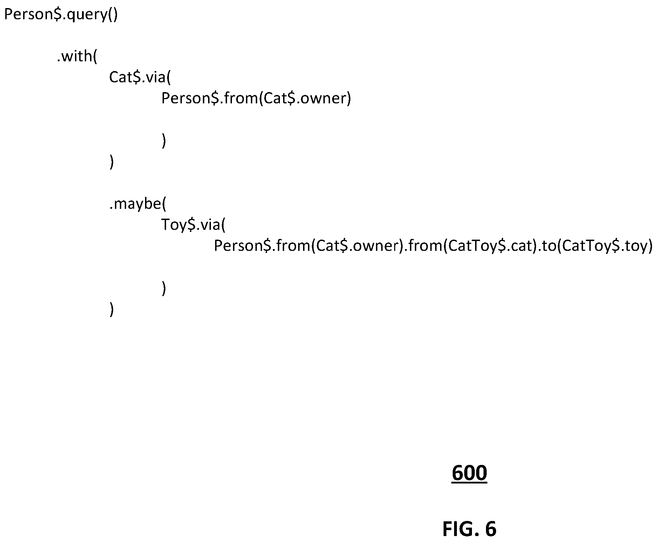

Figure 6 illustrates an example of a modified user query according to various embodiments of the present application. In the example shown, query 600 is a sample query for joining four data entities provided in Figure 4A (e.g., a "toy" data entity 405, a "catToy" data entity 410, a "cat" data entity 415, and a "person" data entity 420).

Query 600 indicates that the processing of the query is to start from the person node (e.g., "person" data entity 420). The node from which the processing of the query starts may be referred to as the root node. The "with" command is a navigation that filters results to the query. A result comprised of both the root node and a "target node" is only returned if a valid link (e.g., a reference or enumerated relationship between the two data entities) exists between the root node and the target node. Query 600 requests that only people who have cats are returned as results for the query. In this example, the target node is the cat node (e.g., "cat" data entity 415).

The path line "Person$.from(Cat$.owner)" in query 600 describes how the person node relates to the cat node. These paths can start from the perspective of the root node (e.g., the person node) and describe how to navigate to the target node. As an example, there is a foreign key reference in the cat node (e.g., the "Cat" table) called owner that refers to the person node (e.g., the "Person" table). The use of the "from" method in this path indicates that the link between the person node and the cat node resides in the cat node (e.g., the "Cat" table).

The line "maybe" refers to an optional navigation if a link between the target node and the root node exists. A result comprised of both the root node and the target node will be returned, otherwise, a result will still be returned, however, the result will only comprise the root node. The logic in the "maybe" navigation comprised in query 600 requests that the query result include an indication of any toys owned by the person's cat, if any such toys exist.

The path "Person$.from(Cat$.owner).from(CatToy$.cat).to(CatToy$.toy) is more complicated than the path "Person$.from(Cat$.owner) because this path joins through multiple nodes (e.g., the path joins through multiple tables).

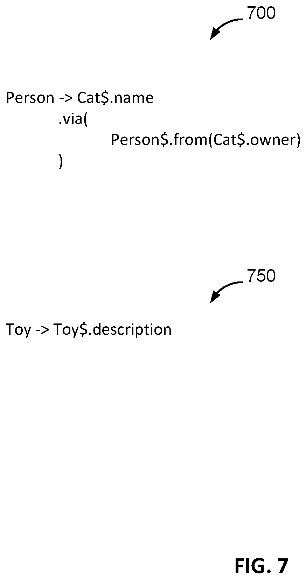

Figure 7 illustrates an example of a mapping of a securable entity to a securing entity for a data model according to various embodiments of the present application. In the example shown, mapping 700 is a sample mapping between data entities in data model 400 of Figure 4A (e.g., a "cat" data entity 415, a "person" data entity 420). Mapping 700 maps the securable node (e.g., the person node) to its securing node (e.g., the cat node). The value of the map is a route, which is comprised of a path from one data entity to another, and a specific property of the destination node (e.g., the name field within "cat" data entity 415).

The mapping line "Person -> Cat$.name" indicates the property on the securing node, the value of which will be used for filtering results. The command .via( Person$.from(Cat$.owner)) describes the link between the securable node (e.g., the person node) and the securing node (e.g., the cat node). Mapping 700 indicates that the path starts on the securable node and ends on the securing node.

As illustrated by mapping 750, a node can secure itself. Mapping 750 entity maps a securable node (e.g., the toy node) to its securing node (e.g., also the toy node). The property/field "description" is defined as the property on the securing node whose value will be used to filter query results. No path is required to be defined for this mapping because this node is secured by itself.

Figure 8 is a flow diagram of a method for executing a query according to various embodiments of the present application. In some embodiments, process 800 is implemented at least in part by system 100 of Figure 1, system 200 of Figure 2, and/or system 300.

At 805, the system obtains a user query.

At 810, the system obtains a set of nodes involved in the user query. The system determines the set of nodes based at least in part on parsing the query, identifying data that is responsive to the query, determining, for that responsive data, a securing path and securing node based at least in part on a policy (e.g., an access permissions policy), and further iteratively determining securing paths and securing nodes for each node encountered in the navigation path as the system walks to the root node.

At 815, the system selects a node from the set of nodes.

At 820, the system determines whether a filter is to be added for the selected node. The system determines whether a filter is to be added based on a set of access permissions associated with accessing the node. The set of access permissions may be defined based at least in part on access permissions for the securing node associated with the selected node. The system can query a policy engine to determine whether a user has the requisite permissions to access the data at the selected node. In response, the system can receive from the policy engine an indication of whether the user has the requisite permissions to access the data at the selected node, and if the user has access permissions for a subset of the data at the selected node, an indication of the conditions or restrictions with respect the user's access of data at the selected node. In response to determining that a filter is not to be added for the selected node, process 800 proceeds to 830. In response to determining that a filter is to be added for the selected node, process 800 proceeds to 825.

At 825, the system determines one or more predicates for the selected node. In response to determining that the user has access permissions for a subset of data at the selected node (e.g., the user has conditional or restricted access to such data), the system determines the one or more predicates to be applied with respect to accessing data at the selected node. The system can determine the set of predicates based at least in part on the subset of the data at the selected node for which the user has requisite access permissions and/or an indication of the conditions or restrictions with respect to the user's access of data at the selected node.

At 830, the system determines whether the set of nodes comprises another node to be processed. In response to determining that the set of nodes comprises another node to be processed, process 800 returns to 815 and process 800 iterates over 815-830 until no further nodes in the set of nodes are to be processed. In contrast, in response to determining that the set of nodes does not comprise any further nodes to be processed, process 800 proceeds to 835.

At 835, the system modifies the query based at least in part on the one or more predicates for each of the set of nodes. The system can generate a modified query in which one or more filters enforce access security at the dataset being queried. The one or more filters are defined based at least in part on the set of predicates determined for the nodes in the navigation path of the query.

At 840, the system causes the modified query to be executed. The system can provide the modified query to a data source (e.g., a database) for execution. The data source can execute the modified query and return data responsive to the user query for which the user has the requisite access permissions. For example, the modified query has security functionality embedded therein, such as in the form of a filter (e.g., a filter defined by a set of predicates), and when the modified query is executed the filter is applied thereby, causing the access permissions to be enforced. In some embodiments, the data source (e.g., the database) does not need to call functionality for security/access permission enforcement (e.g., a local policy defining access security functionality) in connection with the modified query. The data source further does not need to know a user's permissions with respect to data responsive to the query. Rather, the access permissions are enforced in the security functionality embedded in the modified query (e.g., in the form of the one or more filters). Accordingly, the data source can execute the modified query and access permissions are effectively enforced on the initial query by the execution of a modified query instead of the initial query, and the data source can execute the query without calling any further access security functionality (e.g., with respect to the query).

At 845, a determination is made as to whether process 800 is complete. In some embodiments, process 800 is determined to be complete in response to a determination that no further queries are to be evaluated, no further queries are received, an administrator indicates that process 800 is to be paused or stopped, etc. In response to a determination that process 800 is complete, process 800 ends. In response to a determination that process 800 is not complete, process 800 returns to 805.

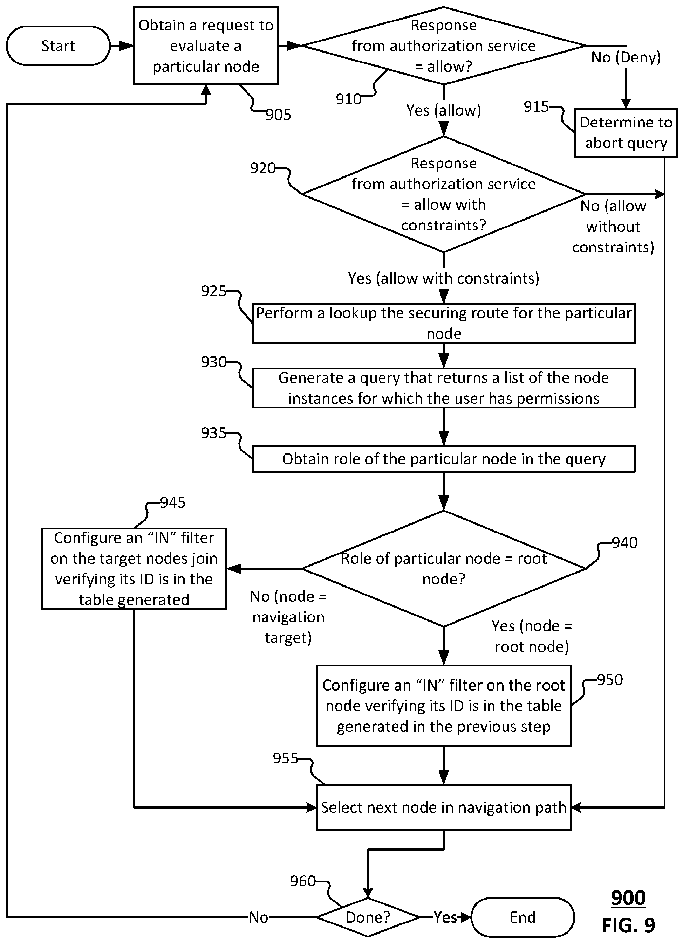

Figure 9 is a flow diagram of a method for modifying a query to have an access security functionality embedded in a modified query according to various embodiments of the present application. In some embodiments, process 900 is implemented at least in part by system 100 of Figure 1, system 200 of Figure 2, and/or system 300. In some embodiments, process 900 is invoked in connection with evaluating access permissions for a particular node in a navigation path of the query. For example, process 900 is invoked to implement part of process 800 (e.g., 820 and 825).

At 905, the system obtains a request to evaluate a particular node. The particular node is a selected node determined during walking of the navigation path for a query.

At 910, the system determines whether a response from an authorization service indicates that the query is to be allowed or denied. The system can query the authorization service to determine whether the user has requisite access permissions to access data at the particular node. If the authorization service indicates that the user has unrestricted access to the data at the particular node or that the user has requisite access permissions to access a subset of data at the particular node, then the system deems the response that the query is to be allowed. In response to determining that the response from the authorization service indicates that the query is to be denied/disallowed, process 900 proceeds to 915 at which the system determines to abort the query. Thereafter, process 900 proceeds to 955. Conversely, in response to determining that the response from the authorization service indicates that the query is to be allowed, process 900 proceeds to 920.

At 920, the system determines whether the response from the authorization service indicates that the query is to be allowed with constraints. For example, the system determines whether the authorization service indicates that the user has requisite access permissions to access a subset of data (e.g., only a subset of data) at the particular node. In other words, the user has conditional or restricted access to data at the node. In response to determining that the response from the authorization service indicates that the query is to be allowed without constraints, process 900 proceeds to 955, for example, because no filters (e.g., no predicates) are to be applied with respect to access of the particular node. Conversely, in response to determining that the response from the authorization service indicates that the query is to be allowed with constraints, process 900 proceeds to 925.

At 925, the system performs a lookup of the securing route for the particular node. For example, the securing path is looked up for each node that is involved directly in the query. In some embodiments, the paths are retrieved from security annotations on the model itself. In some embodiments, the annotations currently live in the authorization enforcement point. In some embodiments, the system queries a policy engine for an indication of the securing path. In some embodiments, the policy engine can determine the securing path based at least in part on identifying a securing node for the particular node.

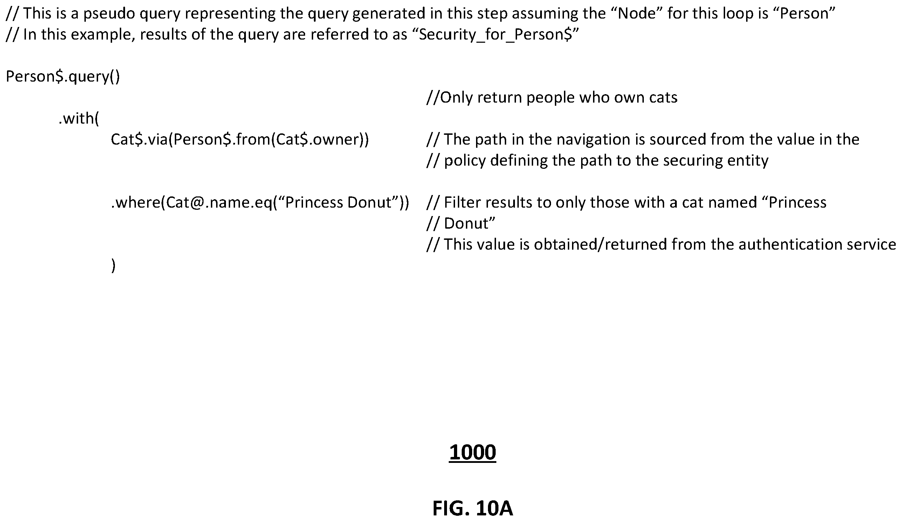

At 930, the system generates a query that returns a list of node instances for which the user has permissions. For example, the system determines the filter(s), or set of predicates, which limits the user's access at the particular node to the subset of data for which the user has requisite access permissions. In some embodiments, query 1000 of Figure 10A is an illustrative example that is generated at 930.

At 935, the system obtains a role of the particular node in the query. For example, the system determines whether the particular node corresponds to the root node.

At 940, the system determines whether the role for the particular node in the query is the root node. In response to determining that the particular node does not serve as the root node for the query, process 900 proceeds to 945. Conversely, in response to determining that the particular node serves as the root node in the query, process 900 proceeds to 950.

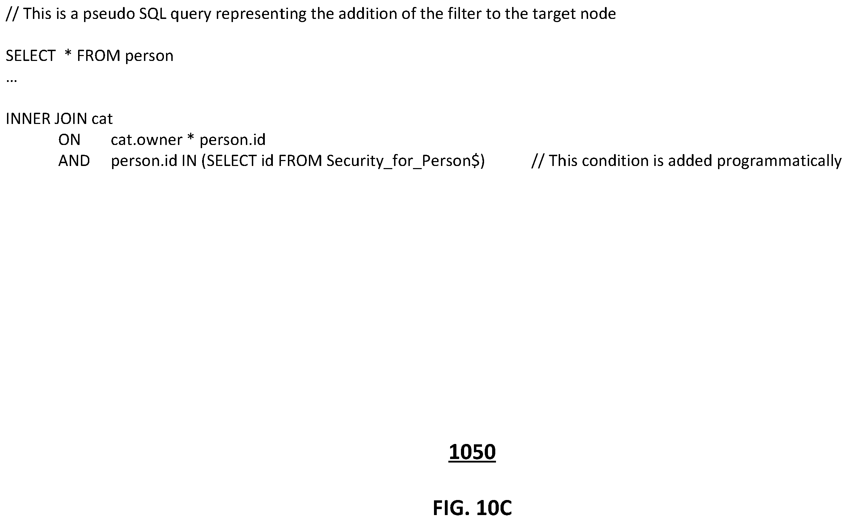

At 945, the system generates an "AND" function of an "IN" filter on the target nodes that verifies that its identifier is in the table generated at 930. For example, the system generates a predicate that only joins those node instances (e.g., the data at the particular node) for which the user has requisite permissions. In some embodiments, query 1050 of Figure 10C is an illustrative example that is generated at 930. Thereafter, process 900 proceeds to 955.

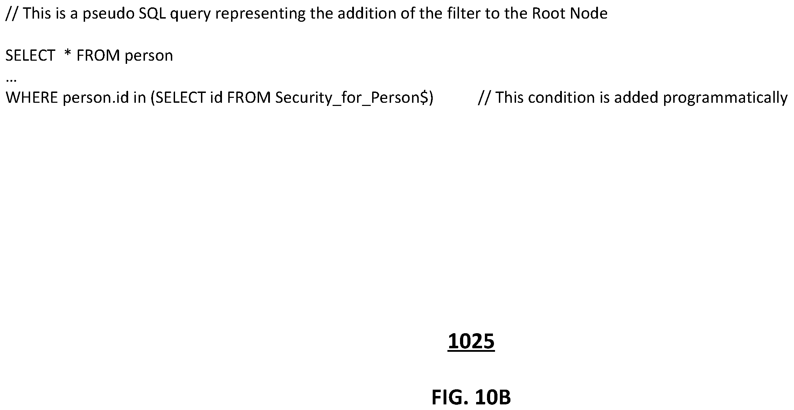

At 950, the system generates an "AND" function of an "IN" filter on the root node that verifies that its identifier is in the table generated at 930. In some embodiments, query 1025 of Figure 10B is an illustrative example that is generated at 930. Thereafter, process 900 proceeds to 955.

At 955, the system selects the next node in the navigation path, if any. For example, if the next node is selected, process 900 can return to 905 for an evaluation of the node whereby process 900 iterates over 910-955 for such next node. If no further next node exists in the navigation path, then process 900 may end.

In response to determining the set of predicates or the filter(s) to be applied with respect to the node(s) in the navigation path, the system provides the set of predicates or the filter(s) to the process, service, or other system that invoked process 900.

At 960, a determination is made as to whether process 900 is complete. In some embodiments, process 900 is determined to be complete in response to a determination that no further queries are to be evaluated, no further filters are to be determined, no further queries are to be modified, no further nodes are to be processed or evaluated in the navigation path for a particular query, an administrator indicates that process 900 is to be paused or stopped, etc. In response to a determination that process 900 is complete, process 900 ends. In response to a determination that process 900 is not complete, process 900 returns to 905.

Figure 10A illustrates an example of a filter for accessing data at a securable entity according to various embodiments of the present application. Query 1000 is a representative example of a pseudo query for a query generated at 930 to obtain a list of node instances for which the user has access permissions. Query 1000 can be used to return the list of the subset of data for which the user has requisite access permissions with respect to the particular node.

Query 1000 is generated in the context whereby the particular node for which the node instances are to be queried is for the "person" node. This query is a query to return only people who own cats. The path "Cat$.via(Person$.from(Cat$.owner)) corresponds to a securing path that can be identified by a policy engine when determining the access permissions for the particular node (e.g., when identifying the securing node). The filter "where(Cat@.name.eq("Princess Donut") is a filter that is added to return only those persons with cats named "Princess Donut". This filter corresponds to the subset of data for which the user has requisite access permissions. For example, rather than return all persons with cats, based on the user access permissions, the system determines that the user only has permission to access data for the persons having a cat named "Princess Donut."

The results for query 1000 is referred to as "Security_for_Person$" in this example.

Figure 10B illustrates an example of a filter for accessing data at a root entity according to various embodiments of the present application. Query 1025 is a representative example of a pseudo query for a filter or predicate for a modified query generated at 950. Query 1025 can be used to return the filter (e.g., the set of predicates) to be added with respect to the root node. As shown, query 1025 returns those persons from the result of the query 1000, which is referred to as "Security_for_Person$" in this example. Only those persons identified in the results from query 1000 (e.g., in the table/list generated at 930) will be joined.

Figure 10C illustrates an example of a filter for accessing data at a securable entity according to various embodiments of the present application. Query 1050 is a representative example of a pseudo query for a filter or predicate for a modified query generated at 945. Query 1050 can be used to return the filter (e.g., the set of predicates) to be added with respect to the target node. As shown, query 1050 returns those persons having a cat that are identified on the result of the query 1000, which is referred to as "Security_for_Person$" in this example. Only those persons having a cat which are also listed in the table pertaining to the results "Security_for_Person$" will be joined.

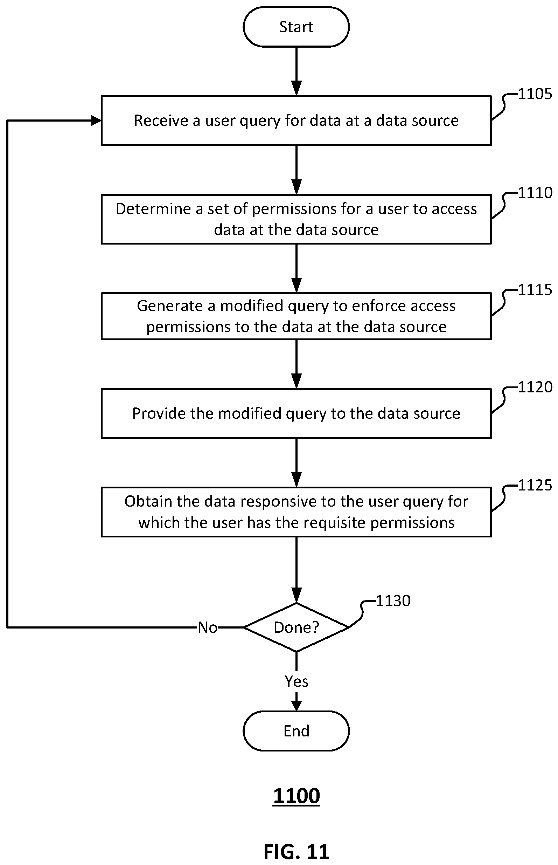

Figure 11 is a flow diagram of a method for executing a query according to various embodiments of the present application. In some embodiments, process 1100 is implemented at least in part by system 100 of Figure 1, system 200 of Figure 2, and/or system 300.

According to various embodiments, the system enforces access permissions by embedding security in a modified query. For example, the system modifies a received query in a manner that adds a filter so that only data responsive to the initially received query for which the user has requisite access permissions will be returned from execution of the modified query. The system executes the modified query rather than the initially received query to thereby enforce the access security. The database executing the modified query does not require (e.g., does not have) the security context for the query and the user in relation to the query. For example, the database does not perform any local calls for security functionality or security policies during execution of the modified query. In some embodiments, the access security is implemented through execution of the specific modified query in and of itself (e.g., the data responsive to the modified query is inherently the data responsive to the initial query with access security enforced).

At 1105, the system receives a user query for data at a data source. At 1110, the system determines a set of permissions for a user to access data at the data source. At 1115, the system generates a modified query to enforce access permissions to the data at the data source. In the event that the user's access to data responsive to the user query is conditional (e.g., the user has limited or restricted access for data responsive to the user query), then the system generates the modified query to comprise one or more filters (e.g., defined by a set of predicates) that filter out data for which the user does not have requisite access permissions and that only return data for which the user has requisite permissions. At 1120, the system provides the modified query to the data source. At 1125, the system obtains the data responsive to the user query for which the user has the requisite permissions. At 1130, a determination is made as to whether process 1100 is complete. In some embodiments, process 1100 is determined to be complete in response to a determination that no further queries are to be evaluated, no further queries are received, an administrator indicates that process 1100 is to be paused or stopped, etc. In response to a determination that process 1100 is complete, process 1100 ends. In response to a determination that process 1100 is not complete, process 1100 returns to 1105.

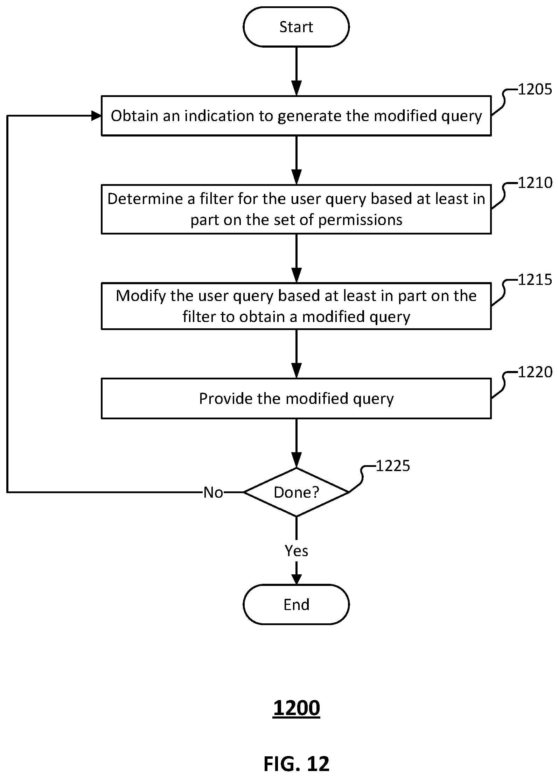

Figure 12 is a flow diagram of a method for modifying a query to have an access security functionality embedded in a modified query according to various embodiments of the present application. In some embodiments, process 1200 is implemented at least in part by system 100 of Figure 1, system 200 of Figure 2, and/or system 300. Process 1200 may be invoked by 1115 of process 1100.

At 1205, the system obtains an indication to generate the modified query. At 1210, the system determines a filter for the user query based at least in part on the set of permissions. At 1215, the system modifies the user query based at least in part on the filter to obtain a modified query. At 1220, the system provides the modified query. In some embodiments, the system provides the modified query to the process, service, or system that invoked process 1200. For example, the system provides the modified query to process 1100 (e.g., 1115). At 1225, a determination is made as to whether process 1200 is complete. In some embodiments, process 1200 is determined to be complete in response to a determination that no further queries are to be evaluated or modified, an administrator indicates that process 1200 is to be paused or stopped, etc. In response to a determination that process 1200 is complete, process 1200 ends. In response to a determination that process 1200 is not complete, process 1200 returns to 1205.

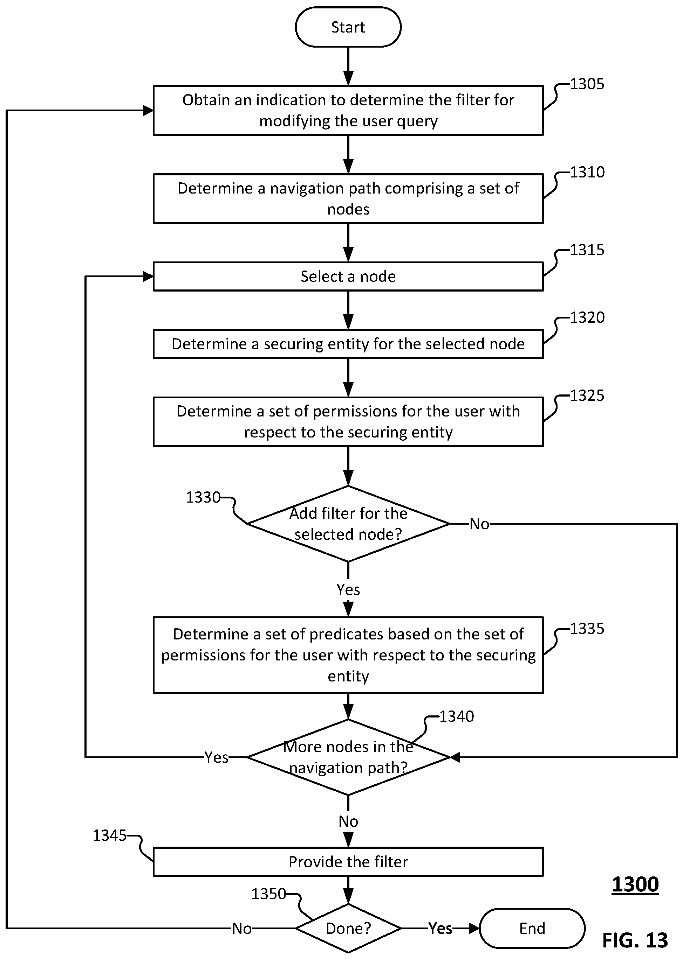

Figure 13 is a flow diagram of a method for determining a filter for a user query according to various embodiments of the present application. In some embodiments, process 1300 is implemented at least in part by system 100 of Figure 1, system 200 of Figure 2, and/or system 300. Process 1300 may be invoked by 1210 of process 1200.

At 1305, the system obtains an indication to determine the filter for modifying the user query. At 1310, the system determines a navigation path comprising a set of nodes. At 1315, the system selects a node. At 1320, the system determines a securing entity for the selected node. At 1325, the system determines a set of permissions for the user with respect to the securing entity. At 1330, the system determines whether a filter is to be added for the selected node. In response to determining that a filter is not to be added for the selected node, process 1300 proceeds to 1340. In contrast, in response to determining that a filter is to be added to the selected node, process 1300 proceeds to 1335. At 1335, the system determines a set of predicates based on the set of permissions for the user with respect to the securing entity. At 1340, the system determines whether another node(s) in the navigation path are to be processed. In response to determining that the navigation path comprises another node(s), process 1300 returns to 1315 and process 1300 iterates over 1315-1340 until no further nodes in the navigation path are to be processed. In contrast, in response to determining the no further nodes in the navigation path are to be processed, process 1300 proceeds to 1345. At 1345, the system provides the filter. In some embodiments, the system provides the modified query to the process, service, or system that invoked process 1300. For example, the system provides the modified query to process 1200 (e.g., 1215). As another example, the system provides the filter to the process, service, or system that invoked process 1300, such as 1210 or process 1200, so the query can be correspondingly modified at 1215. At 1350, a determination is made as to whether process 1300 is complete. In some embodiments, process 1300 is determined to be complete in response to a determination that no further queries are to be evaluated, no further filters are to be determined, no further queries are to be modified, an administrator indicates that process 1300 is to be paused or stopped, etc. In response to a determination that process 1300 is complete, process 1300 ends. In response to a determination that process 1300 is not complete, process 1300 returns to 1305.

Various examples of embodiments described herein are described in the context of a user query and execution of the user query. Although the examples may describe the processing of a user query, various embodiments may similarly process other types of queries, such as queries received from other systems or services.

Various examples of embodiments described herein are described in connection with flow diagrams. Although the examples may include certain steps performed in a particular order, according to various embodiments, various steps may be performed in various orders and/or various steps may be combined into a single step or in parallel.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system, comprising:
one or more processors configured to:
receive a user query for data at a data source;
determine a set of permissions for a user to access the data at the data source,
wherein the user is associated with the user query;
generate a modified query to enforce access permissions to the data at the data source, wherein the modified query is generated based at least in part on the user query and the set of permissions for the user, and the modified query is for data responsive to the user query for which the user has requisite permissions;
provide the modified query to the data source; and
obtain the data responsive to the user query for which the user has the requisite permissions; and
a memory coupled to the one or more processors and configured to provide the one or more processors with instructions.

2. The system of claim 1, wherein generating the modified query comprises to:
determine, based at least in part on the set of permissions, a set of predicates that causes the modified query generated for the user query to only request the data responsive to the user query for which the user has the requisite permissions; and
modify the user query based on the set of predicates to obtain the modified query.

3. The system of claim 2, wherein:
the data source comprises a database storing a dataset that comprises the data responsive to the user query; and
access permissions for the dataset are enforced based at least in part on the database executing the set of predicates comprised in the modified query.

4. The system of claim 3, wherein the database returns data as if the access permissions to the dataset were enforced based on the set of permissions for the user without the database performing a local lookup of the set of permissions for the user.

5. The system according to any one of claims 2-4, wherein the set of predicates define one or more filtering components that are generated based at least in part on the set of permissions for the user.

6. The system according to any one of the preceding claims, wherein the set of permissions for the user is obtained based at least in part on querying a policy repository for one or more policies applicable to the user in connection with accessing the data at the data source.

7. The system according to any one of the preceding claims, wherein generating the modified query comprises to:
determine a navigation path to determine a securing entity for a subset of the data responsive to the user query;
determine the set of permissions for the user in relation to the securing entity;
determine a set of predicates to enforce the user's access of data responsive to the user query, wherein the set of predicates are determined based at least in part on the set of permissions for the user in relation to the securing entity; and
modify the user query based at least in part on the set of predicates to obtain the modified query.

8. The system of claim 7, wherein the set of predicates corresponds to a syntactical representation of a filter for restricting the user's access to the data at the data source.

9. The system of claim 7, wherein determining the navigation path comprises querying a mapping of attributes to securing entities for a map between (a) an attribute associated with the data responsive to the user query, and (b) a securing entity for which access permissions are defined.

10. The system of claim 9, wherein the mapping of attributes to the securing entities is predefined in association with a data model for the data source.

11. The system of claim 7, wherein determining the set of predicates to enforce the user's access of data responsive to the user query comprises traversing the navigation path and determining, for each particular node along a traversal of the navigation path, user permissions for the particular node.

12. The system of claim 11, wherein each node along the navigation path has an associated securing entity.

13. The system of claim 12, wherein the associated securing entity for a particular node is stored in metadata for the particular node.

14. A method, comprising:
receiving a user query for data at a data source;
determining a set of permissions for a user to access the data at the data source, wherein the user is associated with the user query;
generating a modified query to enforce access permissions to the data at the data source, wherein the modified query is generated based at least in part on the user query and the set of permissions for the user, and the modified query is for data responsive to the user query for which the user has requisite permissions;
providing the modified query to the data source; and
obtaining the data responsive to the user query for which the user has the requisite permissions.

15. A computer program product embodied in a non-transitory computer readable medium and comprising computer instructions for:
receiving a user query for data at a data source;
determining a set of permissions for a user to access the data at the data source, wherein the user is associated with the user query;
generating a modified query to enforce access permissions to the data at the data source, wherein the modified query is generated based at least in part on the user query and the set of permissions for the user, and the modified query is for data responsive to the user query for which the user has requisite permissions;
providing the modified query to the data source; and
obtaining the data responsive to the user query for which the user has the requisite permissions.
